# EUROPEAN PATENT APPLICATION

(11) **EP 4 846 845 A1**
(43) Date of publication of application: **02.12.2026**
(21) Application number: 25745459.5
(22) Date of filing: 15.01.2025
(51) Int. Cl.: A01N 1/12

(54) **URINE NEUTRALIZING SOLUTION COMPOSITION FOR PRESERVING CELLS IN URINE AND URINE NEUTRALIZATION TREATMENT METHOD USING SAME**

(30) Priority: 23.01.2024 KR 20240010025
(71) Applicant: Ehlbio Co., Ltd., Uiwang-si, Gyeonggi-do 16006 (KR)
(72) Inventor: LEE, Hong Ki, Seoul 06029 (KR); KIM, Sang Heon, Anyang-si, Gyeonggi-do 14033 (KR); SO, Hyung Jun, Anyang-si, Gyeonggi-do 14021 (KR); KANG, Tae Wook, Seoul 08845 (KR); SONG, Myoung Lim, Seoul 05065 (KR)
(74) Representative: Schlich
(86) International application number: PCT/KR2025/000909
(87) International publication number: WO 2025/159442

(57) **Abstract**

The present invention relates to a urine neutralizing solution composition for preserving cells in urine and a urine neutralization treatment method using same. More specifically, the present invention relates to: a urine neutralizing solution composition comprising buffered saline, vitamin C (ascorbic acid), glucose, and optionally polyethylene glycol (PEG); and a urine neutralization treatment method comprising a step of adding the urine neutralizing solution composition to urine. When urine is preserved under refrigeration using the urine neutralizing solution composition according to the present invention, not only can colony forming ability and cell proliferation ability be maintained, but the cell preservation period can also be extended to 24 hours or longer, preferably 48 hours or longer, and most preferably 72 hours or longer.

## Description

### [Technical Field]

The present invention relates to a urine neutralizing solution composition for preserving cells in urine and a urine neutralization treatment method using the same. More specifically, the present invention relates to a urine neutralizing solution composition comprising buffered saline, vitamin C (ascorbic acid), glucose, and optionally polyethylene glycol (PEG), and a urine neutralization treatment method comprising a step of adding the urine neutralizing solution composition to urine.

When urine is refrigerated and preserved using the urine neutralizing solution composition according to the present invention, not only can cell colony-forming ability and cell proliferation ability be maintained, but also the cell preservation period can be extended to 24 hours or longer, preferably 48 hours or longer, and most preferably 72 hours or longer.

### [Background Art]

Urine is generated by filtering blood in the kidneys, and this process consists of three stages: filtration, reabsorption, and secretion. In the filtration stage, dissolved components in the blood are filtered through the glomeruli of the kidneys. Subsequently, in the reabsorption stage, molecules, ions, and water required by the body are reabsorbed into the blood. Finally, in the secretion stage, hydrogen ions, creatinine, drugs, urea, and the like are transferred from the blood to the collecting ducts and are ultimately excreted as urine.

Various cells of the kidney, bladder, and urinary tract system may be included and excreted in urine, and recently, research on cells found in such urine has been conducted in various and innovative directions. Representative examples include studies on developing biomarkers for the detection, monitoring, and treatment of bladder cancer by analyzing cells in urine, or investigating the effects of conventional and novel therapeutic methods on bladder epithelial cells. In addition, research using stem cells derived from urine (urine-derived stem cells, UDSCs) is opening new possibilities in various medical fields such as neurological diseases. Urine-derived stem cells can be easily collected by a non-invasive method and possess stem cell characteristics, thereby attracting attention in various application fields such as disease modeling, drug screening, and tissue repair.

As such, as the potential application value of cells in urine is gradually increasing, there is a demand for the isolation and culture of cells in urine. However, after urine is discharged outside the body, the environment thereof is not cell-friendly. Urine contains high concentrations of waste products and electrolytes, and under such conditions, it is difficult for cells to survive for a long period of time. Due to the cytotoxicity of urine, there is a problem in that cells in urine are damaged over time after urine collection. This causes reduction in cell lifespan, growth delay and accelerated aging, cell death, and the like, thereby acting as a significant limitation in analyzing or culturing cells in urine in vitro.

To date, there is very little research evidence in the scientific literature identifying the direct cause of the cytotoxicity of urine; however, the major reasons why urine exhibits cytotoxicity to cells may be presumed as follows. First, osmotic stress: since components in urine are generally in a highly concentrated state, they may induce an osmotic imbalance inside and outside cells. Second, pH imbalance: urine exhibits weak acidity or weak alkalinity depending on physiological conditions such as health condition, food intake, and drug administration, which may affect intracellular enzyme activity and metabolic processes. Third, cytotoxic components: urea, uric acid, ammonia, reactive oxygen species, and the like contained in urine may accelerate cell death by causing osmotic imbalance, pH imbalance, cell membrane damage, cell cycle disorders, cell DNA damage, promotion of oxidative stress, and the like.

In general, isolating cells from fresh urine has been considered to be the most efficient; however, this is possible only when a urine donor can immediately access a research facility or a cell processing facility. In particular, when progenitor cells or stem cells derived from kidneys, bladder, and the like isolated from a patient's urine are intended to be used as an autologous cell therapeutic agent, a storage or transportation process from the hospital where urine was collected to a cell processing facility is required, and during this process, there is a problem in that cells in urine are damaged or die within several hours due to the toxicity of urine.

### Prior Art

1. Korean Patent Publication No. KR 10-2023-0165334 A

### [Disclosure]

### [Technical Problem]

The present inventors made extensive efforts to develop a urine neutralizing solution capable of extending the preservation and transportation period of urine by preventing damage to and death of cells present in urine over time, and as a result, confirmed that when urine is refrigerated and preserved using a composition comprising buffered saline, vitamin C (ascorbic acid), and glucose, the effects of cytotoxic components can be minimized, damage to cells in urine can be prevented, and the cell preservation period can be extended to 24 hours or longer, preferably 48 hours or longer, thereby completing the present invention.

In addition, the present inventors confirmed that when urine is refrigerated and preserved using a composition comprising buffered saline, vitamin C (ascorbic acid), glucose, and polyethylene glycol (PEG), not only can cell colony-forming ability and cell proliferation ability be maintained (see Example 6), but also the cell preservation period can be extended up to 72 hours (see Example 7). [15]

Accordingly, an object of the present invention is to provide a urine neutralizing solution composition comprising buffered saline, vitamin C (ascorbic acid), and glucose.

Another object of the present invention is to provide a urine neutralization treatment method using a urine neutralizing solution composition comprising buffered saline, vitamin C (ascorbic acid), and glucose.

However, the problems to be solved by the present application are not limited to the above-mentioned problems, and other problems not mentioned herein will be clearly understood by those skilled in the art from the following description.

### [Technical Solution]

The present invention is intended to provide a urine neutralizing solution composition comprising buffered saline, vitamin C (ascorbic acid), and glucose, and a urine neutralization treatment method using the urine neutralizing solution composition comprising buffered saline, vitamin C (ascorbic acid), and glucose.

According to a first embodiment,
disclosed is a urine neutralizing solution composition comprising buffered saline, vitamin C (ascorbic acid), and glucose.

In the present invention, the buffered saline may be added in an amount of 50 to 200% based on the volume of urine.

In the present invention, the vitamin C may be added at a concentration of 50 to 600 µg/mL.

In the present invention, the glucose may be added at a concentration of 5 to 60 mM.

In the present invention, the urine neutralizing solution composition may further comprise polyethylene glycol (PEG).

In the present invention, the polyethylene glycol may be added at a concentration of 10 to 60 mg/mL.

In the present invention, the urine neutralizing solution composition may consist of buffered saline, vitamin C (ascorbic acid), glucose, and polyethylene glycol (PEG).

In the present invention, the urine neutralizing solution composition may consist of 100% buffered saline, 600 µg/mL vitamin C (ascorbic acid), 60 mM glucose, and 60 mg/mL polyethylene glycol (PEG) based on the volume of urine.

According to a second embodiment,
disclosed is a urine neutralization treatment method comprising adding the urine neutralizing solution composition according to the first embodiment to urine.

In the present invention, the method may further comprise storing the urine to which the urine neutralizing solution composition has been added at 2 to 8°C for 1 day to 5 days.

### [Advantageous Effects]

When urine is refrigerated and preserved using the urine neutralizing solution composition according to the present invention, not only can cell colony-forming ability and cell proliferation ability be maintained, but also the cell preservation period can be extended to 24 hours or longer, preferably 48 hours or longer, and most preferably 72 hours or longer.

### [Description of Drawings]

FIG. 1 shows changes in cell viability in urine according to Example 1 of the present invention.
FIG. 2 shows changes in cell viability in urine according to the added volume and concentration of buffered saline according to Example 2 of the present invention.
FIG. 3 shows changes in cell viability in urine according to the added concentration of polyethylene glycol according to Example 3 of the present invention.
FIG. 4 shows changes in cell viability in urine according to the added concentration of vitamin C according to Example 4 of the present invention.
FIG. 5 shows changes in cell viability in urine according to the added concentration of glucose according to Example 5 of the present invention.
FIG. 6 shows the cell preservation effect of the urine neutralizing solution composition according to Example 6 of the present invention.
FIG. 7 shows the cell preservation effect of the urine neutralizing solution composition according to Example 7 of the present invention.

### [Best Mode]

Hereinafter, a urine neutralizing solution composition for preserving cells in urine and a urine neutralization treatment method using the same according to specific embodiments of the invention will be described in detail. However, these are presented merely as examples of the invention, and the scope of rights of the invention is not limited thereby, and it will be apparent to those skilled in the art that various modifications to the embodiments are possible within the scope of rights of the invention. Unless otherwise specifically stated throughout the present specification, the terms "comprise" or "include" refer to including a certain component (or constituent element) without particular limitation, and should not be construed as excluding the addition of other components (or constituent elements). [48]

### 1. Urine Neutralizing Solution Composition

The present invention is intended to provide a urine neutralizing solution composition comprising buffered saline, vitamin C (ascorbic acid), and glucose.

n the urine neutralizing solution composition according to the present invention, the buffered saline may be added at a concentration of 50 to 200%, preferably 100 to 200%, and most preferably 100%, based on the volume of urine.

In the urine neutralizing solution composition according to the present invention, the vitamin C may be added at a concentration of 50 to 600 µg/mL, preferably 400 to 600 µg/mL, and most preferably 600 µg/mL.

In the urine neutralizing solution composition according to the present invention, the glucose may be added at a concentration of 5 to 60 mM, preferably 40 to 60 mM, and most preferably 60 mM.

In the urine neutralizing solution composition according to the present invention, the urine neutralizing solution composition may further comprise polyethylene glycol (PEG).

In the urine neutralizing solution composition according to the present invention, the polyethylene glycol may be added at a concentration of 10 to 60 mg/mL, preferably 40 to 60 mg/mL, and most preferably 60 mg/mL.

In the urine neutralizing solution composition according to the present invention, the urine neutralizing solution composition may consist of buffered saline, vitamin C (ascorbic acid), glucose, and polyethylene glycol (PEG).

In the urine neutralizing solution composition according to the present invention, the urine neutralizing solution composition may consist of 100% buffered saline, 600 µg/mL vitamin C (ascorbic acid), 60 mM glucose, and 60 mg/mL polyethylene glycol (PEG) based on the volume of urine.

In the urine neutralizing solution composition according to the present invention, the urine neutralizing solution composition may be added in an amount of 5 to 30%, preferably 10 to 20%, and most preferably 10%, based on the volume of urine.

In the urine neutralizing solution composition according to the present invention, the urine may be derived from a mammal. For example, the mammal may include a human, a non-human primate, a mouse, a rat, a dog, a cat, a horse, or a cow, but is not limited thereto.

### 2. Urine Neutralization Treatment Method

The present invention is intended to provide a urine neutralization treatment method comprising adding a urine neutralizing solution composition comprising buffered saline, vitamin C (ascorbic acid), and glucose to urine.

In the urine neutralization treatment method according to the present invention, the method may further comprise storing the urine to which the urine neutralizing solution composition has been added at 2 to 8°C for 1 day to 5 days.

In the urine neutralization treatment method according to the present invention, the buffered saline may be added at a concentration of 50 to 200%, preferably 100 to 200%, and most preferably 100%, based on the volume of urine.

In the urine neutralization treatment method according to the present invention, the vitamin C may be added at a concentration of 50 to 600 µg/mL, preferably 400 to 600 µg/mL, and most preferably 600 µg/mL.

In the urine neutralization treatment method according to the present invention, the glucose may be added at a concentration of 5 to 60 mM, preferably 40 to 60 mM, and most preferably 60 mM.

In the urine neutralization treatment method according to the present invention, the urine neutralizing solution composition may further comprise polyethylene glycol (PEG).

In the urine neutralizing solution composition according to the present invention, the polyethylene glycol may be added at a concentration of 10 to 60 mg/mL, preferably 40 to 60 mg/mL, and most preferably 60 mg/mL.

In the urine neutralization treatment method according to the present invention, the urine neutralizing solution composition may consist of buffered saline, vitamin C (ascorbic acid), glucose, and polyethylene glycol (PEG).

In the urine neutralization treatment method according to the present invention, the urine neutralizing solution composition may consist of 100% buffered saline, 600 µg/mL vitamin C (ascorbic acid), 60 mM glucose, and 60 mg/mL polyethylene glycol (PEG) based on the volume of urine.

In the urine neutralization treatment method according to the present invention, the urine neutralizing solution composition may be added in an amount of 5 to 30%, preferably 10 to 20%, and most preferably 10%, based on the volume of urine.

In the urine neutralization treatment method according to the present invention, the urine may be derived from a mammal. For example, the mammal may include a human, a non-human primate, a mouse, a rat, a dog, a cat, a horse, or a cow, but is not limited thereto.

### [Mode for Invention]

Hereinafter, various examples are provided to facilitate understanding of the invention. The following examples are provided solely to aid in the understanding of the invention and are not intended to limit the scope of the invention to these examples.

### <Example>

### Example 1. Changes in Cell Viability in Urine Over Time

Since the number of cells present in urine is very small, it is difficult to accurately evaluate cytotoxicity over time with respect to actual cells in urine. Therefore, using urine-derived stem cells (UDSCs), which have excellent cell adhesion and proliferation ability and stably express biological characteristics among cells that may exist in urine, the level of cell death of cells in urine can be reproduced at the laboratory level as follows.

3 × 10⁵ urine-derived stem cells isolated from fresh urine of a healthy donor were each suspended in 1 mL of urine obtained from 10 different male and female donors, and samples were collected at 0 hours (immediately after suspension in urine), 3 hours, 6 hours, and 24 hours, followed by measurement of cell viability (%) using an automated cell counter (ADAM-MC, NanoEntek) and an automated cell counter kit (ADAM^{™} AccuChip Kit, NanoEntek). In this Example, the reliable measurement range of the automated cell counter used was appropriate at 5 × 10⁴ cells/mL to 4 × 10⁶ cells/mL, and only values in which the total cell number was measured within an error range of about 20% of the initially suspended cell concentration (3 × 10⁵ cells/mL) were determined to be valid.

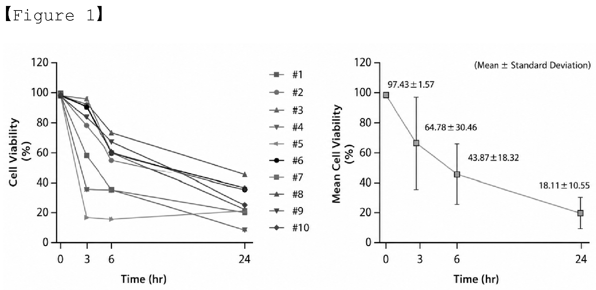

As a result, all cells suspended in urine showed a tendency of decreased viability over time. The viability within the initial 3 hours to 6 hours showed large differences depending on the sample, and thereafter, the cell viability of all samples was confirmed to be significantly decreased to an average of 18.11 ± 10.55% after 24 hours (FIG. 1).

### Example 2. Cell Protective Effect of Buffered Saline in Urine

After suspending 3 × 10⁵ urine-derived stem cells in 1 mL of urine, buffered saline was added and mixed at volumes of 10, 50, 100, and 200% relative to the urine volume, respectively, and the cell protective effect was evaluated.

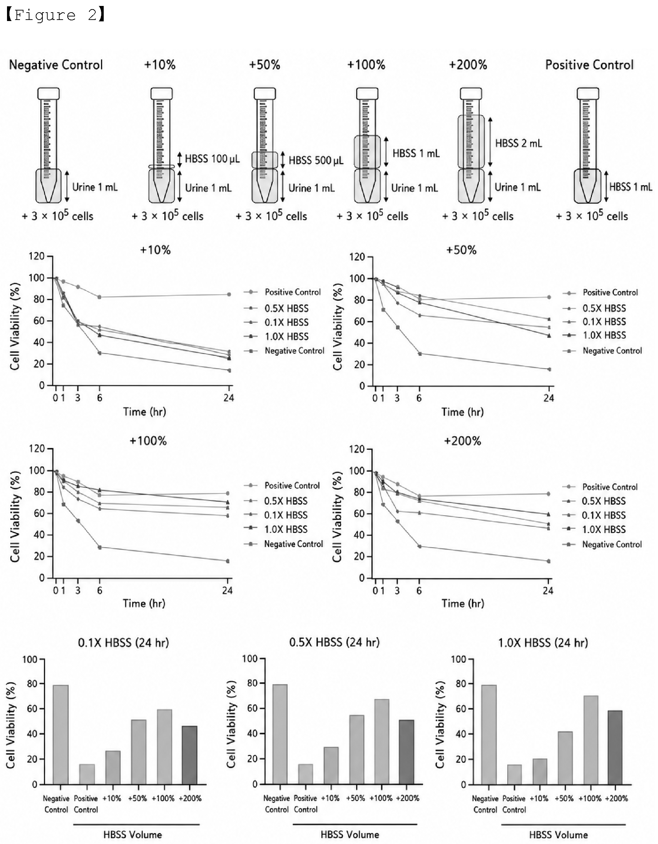

As a result, whereas the cell viability of the negative control suspended in urine at 24 hours was less than about 20%, a significant improvement in cell viability was observed when HBSS was added at an amount of 50% to 200% of the urine volume, and the effect was shown to be dependent on the amount of added HBSS. In addition, in order to confirm differences in cell protective efficacy according to the concentration of HBSS, changes were observed by diluting HBSS to 0.5X and 0.1X based on the concentration generally used in cell culture (1X), and as a result, no statistically significant difference was observed within the HBSS concentration range of 0.1X to 1X (FIG. 2).

### Example 3. Cell Protective Effect of Polyethylene Glycol (PEG) in Urine

After suspending 3 × 10⁵ urine-derived stem cells in 1 mL of urine, PEG solutions were added at concentrations of 0, 10, 20, 40, and 60 mg/mL, respectively, and the cell protective effect was evaluated. PEG was dissolved in HBSS, and the addition volume of each concentration of PEG solution was added at 10% of the urine volume so that the effect of HBSS was minimized while the cell protective effect of PEG could be appropriately confirmed.

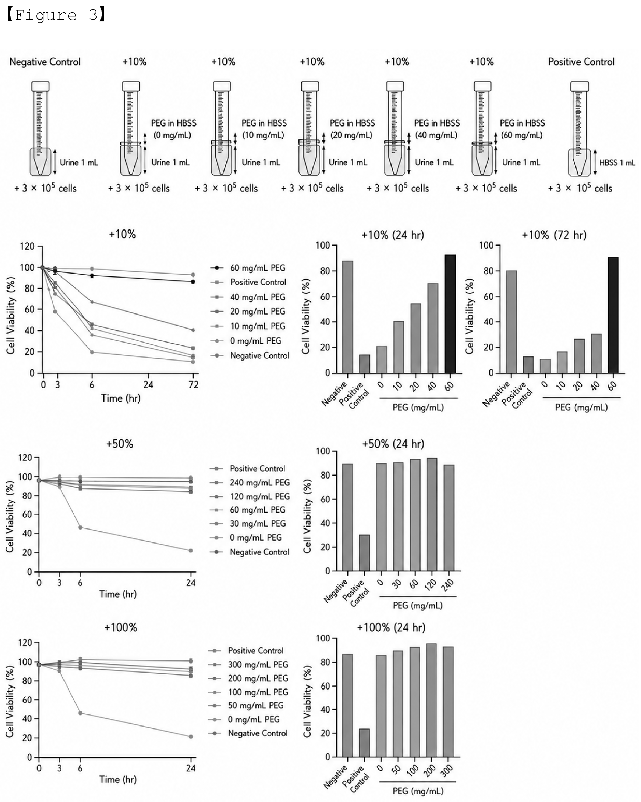

As a result, compared to the negative control and the HBSS control group (PEG 0 mg/mL), a significant improvement in cell viability was observed when PEG was added at concentrations of 10 mg/mL to 60 mg/mL, and the effect was shown to be dependent on the concentration of added PEG. In particular, whereas there was almost no cell protective effect when HBSS was added at 10% of the urine volume, it was confirmed that when PEG was added at a concentration of 60 mg/mL, cell viability was improved to a level equivalent to that of the positive control group. This cell protective effect of PEG at 60 mg/mL was maintained up to 72 hours, confirming that the survival period of cells in urine was significantly extended. In addition, as a result of performing the same analysis while increasing the addition volume and concentration of the PEG solution, it was shown that a cell protective effect equivalent to that of the positive control group was maintained up to a PEG addition amount of 100% of the urine volume and a PEG concentration of 300 mg/mL (FIG. 3).

### Example 4: Cell Protective Effect of Vitamin C (Ascorbic Acid) in Urine

After suspending 3 × 10⁵ urine-derived stem cells in 1 mL of urine, Vit.C solutions were added at concentrations of 0, 50, 200, 400, and 600 µg/mL, respectively, and the cell protective effect was evaluated. Vit.C was dissolved in HBSS, and the addition volume of each concentration of Vit.C solution was added at 50% of the urine volume so that the effect of HBSS was minimized while the cell protective effect of Vit.C could be appropriately confirmed.

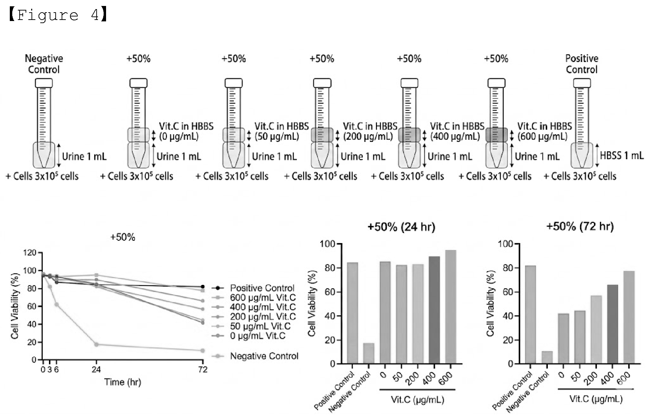

As a result, compared to the negative control and the HBSS control group (Vit.C 0 µg/mL), a significant improvement in cell viability was observed at 72 hours in the test groups to which Vit.C was added at concentrations of 50 µg/mL to 600 µg/mL, and the effect was shown to be dependent on the concentration of added Vit.C. In particular, whereas the addition of HBSS at 50% of the urine volume resulted in a cell viability of about 40%, it was confirmed that when Vit.C was added at a concentration of 600 µg/mL, cell viability could be improved to a level of about 80%, which is equivalent to that of the positive control group (FIG. 4).

### Example 5: Cell Protective Effect of Glucose in Urine

After suspending 3 × 10⁵ urine-derived stem cells in 1 mL of urine, glucose solutions were added at concentrations of 0, 5, 20, 40, and 60 mM, respectively, and the cell protective effect was evaluated. The glucose solution was diluted in HBSS, and the addition volume of each concentration of glucose solution was added at 50% of the urine volume so that the effect of HBSS was minimized while the cell protective effect of glucose could be appropriately confirmed.

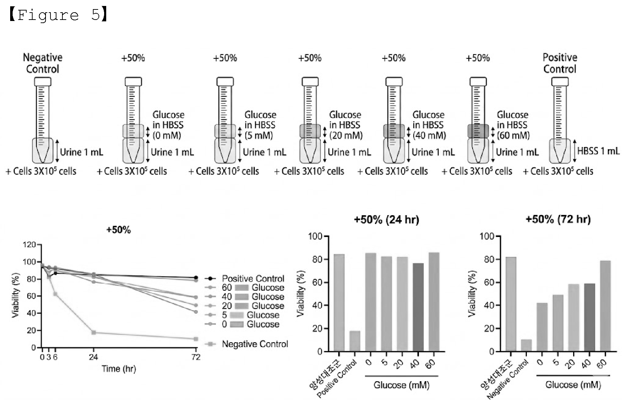

As a result, compared to the negative control and the HBSS control group (glucose 0 mM), a significant improvement in cell viability was observed at 72 hours in the test groups to which glucose was added at concentrations of 5 mM to 60 mM, and the effect was shown to be dependent on the concentration of added glucose. In particular, whereas the addition of HBSS at 50% of the urine volume resulted in a cell viability of about 40%, it was confirmed that when glucose was added at a concentration of 60 mM, cell viability could be improved to a level of about 80%, which is equivalent to that of the positive control group (FIG. 5).

### Example 6: Cell Preservation Effect of the Urine Neutralizing Solution Composition in Urine

Using an optimized urine neutralizing solution obtained by mixing buffered saline, polyethylene glycol, vitamin C, and glucose, the preservation effect on actual cells in urine was evaluated. The researchers of Reference 1 demonstrated the best cell preservation efficiency by adding a cell culture medium (a mixture of keratinocyte-serum free medium [KSFM] and embryonic fibroblast medium [EFM], containing 10% FBS) at 10% of the urine volume. For comparative analysis, the urine neutralizing solution of this Example was prepared by mixing 1X buffered saline, polyethylene glycol (60 mg/mL), vitamin C (600 µg/mL), and glucose (60 mM), and was added at 10% of the urine volume in the same manner as the additive solution of the above researchers.

After adding each test group to 100 mL of fresh urine collected from a total of 12 healthy donors, cells were isolated and cultured after 0, 6, 24, and 48 hours, and the number of colonies of total urine-derived cells, cell culture success rate, and cell proliferation ability were compared. The number of cell colonies was counted through microscopic observation only for colonies consisting of single cells. The cell culture success rate was expressed as a percentage of samples in which adhesion and culture of urine-derived cells were visually confirmed among a total of 12 samples. Cell proliferation ability was evaluated by culturing the cells for 4 days and then using a formula for obtaining the population doubling level (PDL). $PDL = ln \left(Nf/Ni\right) ln 2$ (Ni = number of cells at initial seeding, Nf = final number of cells).

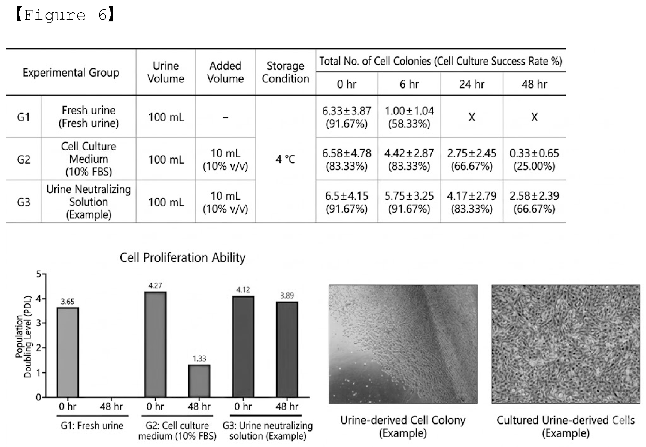

As a result of comparing the number of cell colonies according to urine preservation time, no cell colonies were cultured in fresh urine (G1) after 24 hours. In the urine neutralizing solution of the present invention (G3), cell colonies were excellently cultured up to 48 hours, and a high cell culture success rate was exhibited. In contrast, in the cell culture medium (G2), some cell colonies were confirmed to be cultured up to 24 hours, but almost no cell colonies were formed at 48 hours. As a result of comparing cell proliferation ability according to urine preservation time, urine-derived cells isolated from the cell culture medium (G2) at 48 hours exhibited significantly reduced cell proliferation ability compared to cells isolated immediately after urine collection. In contrast, it was confirmed that the urine neutralizing solution of the present invention (G3) maintained a cell proliferation ability at a level equivalent to that of cells isolated immediately after urine collection even in cells isolated at 48 hours (FIG. 6).

Therefore, it was demonstrated that the urine neutralizing solution composition according to the present invention can significantly extend the maximum preservation period of cells in urine by 100% or more under the same treatment conditions compared to conventional cell culture media containing fetal bovine serum (FBS) and the like.

### Example 7: Cell Preservation Effect in Urine According to Changes in Detailed Composition of the Urine Neutralizing Solution

The cell preservation effects in urine of solutions prepared by mixing different combinations of buffered saline, polyethylene glycol, vitamin C, and glucose, which are detailed components of the urine neutralizing solution, were compared. In this Example, the concentrations of each component of the urine neutralizing solution were configured in different combinations of 1X buffered saline, polyethylene glycol (60 mg/mL), vitamin C (600 µg/mL), and glucose (60 mM), and were added at 10% of the urine volume. After adding each test group to 100 mL of fresh urine collected from 3 healthy donors, cells were isolated and cultured after 0, 6, 24, 48, and 72 hours, and the number of single colonies of urine-derived cells was counted.

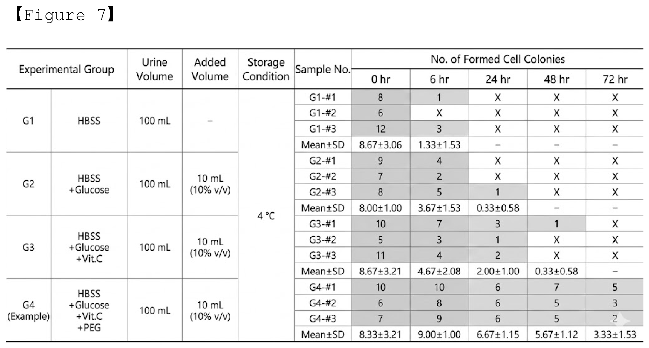

As a result of comparing the number of cell colonies according to urine preservation time, in the test group (G1) to which only 10% HBSS was added, colonies were formed in 2 out of 3 samples at up to 6 hours, but the number of formed colonies was reduced by about 85% compared to that at 0 hours. In the test group (G2) to which 10% of a mixed solution of HBSS and glucose was added, the number of colonies formed at 6 hours was improved compared to the G1 test group, but the probability of colony formation in the sample at 24 hours was very low. In contrast, in the test group (G3) to which 10% of a mixed solution of HBSS, glucose, and Vit.C was added, the number of colonies formed at 24 hours was significantly improved compared to the G2 test group, and colonies were formed up to 48 hours. In particular, in the test group (G4) to which 10% of a mixed solution of HBSS, glucose, Vit.C, and PEG was added, the number of colonies formed at 48 hours was very significantly improved compared to the G3 test group, and it was confirmed that colonies of urine-derived cells could be stably formed in all samples even at up to 72 hours (FIG. 7).

As described above, specific parts of the present invention have been described in detail, and it is apparent to those skilled in the art that such specific descriptions are merely preferred embodiments and that the scope of the present invention is not limited thereby. Accordingly, the substantial scope of the present invention will be defined by the appended claims and equivalents thereof.

### [References]

1. Lang, Ren, Guihua Liu, Yingai Shi, Shantaram Bharadwaj, Xiaoyan Leng, Xiaobo Zhou, Hong Liu, Anthony Atala, and Yuanyuan Zhang. "Self-renewal and differentiation capacity of urine-derived stem cells after urine preservation for 24 hours." PloS one 8, no. 1 (2013): e53980.

### [Industrial Applicability]

When urine is refrigerated and preserved using the urine neutralizing solution composition according to the present invention, not only can cell colony-forming ability and cell proliferation ability be maintained, but also the cell preservation period can be extended to 24 hours or longer, preferably 48 hours or longer, and most preferably 72 hours or longer.

## Claims

1. A urine neutralizing solution composition comprising buffered saline, vitamin C (ascorbic acid), and glucose.

2. The urine neutralizing solution composition according to claim 1, wherein the buffered saline is added in an amount of 50 to 200% based on the volume of urine.

3. The urine neutralizing solution composition according to claim 1, wherein the vitamin C is added at a concentration of 50 to 600 µg/mL.

4. The urine neutralizing solution composition according to claim 1, wherein the glucose is added at a concentration of 5 to 60 mM.

5. The urine neutralizing solution composition according to claim 1, wherein the urine neutralizing solution composition further comprises polyethylene glycol (PEG).

6. The urine neutralizing solution composition according to claim 5, wherein the polyethylene glycol is added at a concentration of 10 to 60 mg/mL.

7. The urine neutralizing solution composition according to claim 1, wherein the urine neutralizing solution composition consists of buffered saline, vitamin C (ascorbic acid), glucose, and polyethylene glycol (PEG).

8. The urine neutralizing solution composition according to claim 1, wherein the urine neutralizing solution composition consists of 100% buffered saline, 600 µg/mL vitamin C (ascorbic acid), 60 mM glucose, and 60 mg/mL polyethylene glycol (PEG) based on the volume of urine.

9. A urine neutralization treatment method comprising: adding the urine neutralizing solution composition according to any one of claims 1 to 8 to urine.

10. The urine neutralization treatment method, wherein the method further comprises storing the urine to which the urine neutralizing solution composition has been added at 2 to 8°C for 1 day to 5 days.
